# EUROPEAN PATENT APPLICATION

(11) **EP 4 757 037 A1**
(43) Date of publication of application: **10.06.2026**
(21) Application number: 25812892.5
(22) Date of filing: 01.07.2025
(51) Int. Cl.: H01M 50/264, H01M 50/502, H01M 10/04, H01M 50/249

(54) **BATTERY MODULE EASY TO INSTALL IN PACK CASE, AND BATTERY PACK INCLUDING SAME**

(30) Priority: 02.10.2024 KR 20240133486
(71) Applicant: LG ENERGY SOLUTION, LTD., Seoul 07335 (KR)
(72) Inventor: Jang, Sunghwan, Daejeon 34122 (KR); Park, Myungki, Daejeon 34122 (KR)
(74) Representative: Plasseraud IP
(86) International application number: PCT/KR2025/009316
(87) International publication number: WO 2026/075329

(57) **Abstract**

A battery module that is easily mountable in a pack case and a battery pack including the same are disclosed. A battery module according to an embodiment of the present disclosure includes a battery cell stack in which a plurality of battery cells are stacked, and a busbar frame on one side of the battery cell stack. The busbar frame includes a busbar electrically connected to a plurality of electrodes of the plurality of battery cells, and a plurality of through holes for fixing to a lower surface of a pack case comprising a battery pack. The plurality of through holes extend through the busbar frame from an upper surface of the busbar frame to a lower surface of the busbar frame for coupling between the busbar frame and the pack case.

## Description

### Technical Field

The present disclosure relates to a battery module and a battery pack including the same, and more particularly, to a battery module that is easily mountable in a pack case, and a battery pack including the same.

### Background

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources. Currently, widely used secondary batteries include lithium-ion batteries, lithium polymer batteries, nickel-cadmium batteries, nickel-hydrogen batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

Note that a cell-to-pack (CTP) process refers to a process of constructing a battery pack by directly arranging battery cells in a pack in order to improve the performance of electric vehicles and increase manufacturing efficiency. The cell-to-pack process eliminates the need to assemble battery cells in a module unit and then assemble the modules into a battery pack, allowing for omission or simplification of intermediate modularization steps. Furthermore, by eliminating a module case, space efficiency and energy density can be increased, and the battery pack can be made lighter. Additionally, by arranging the battery cells directly into the pack case of the battery pack, the cooling system and structure can be designed more efficiently, thereby improving the thermal management performance of the battery.

In the cell-to-pack (CTP) process, since there is no module case for mounting battery cells, a component for mounting a battery module including a plurality of battery cells into a pack case is required. In the cell-to-pack (CTP) process, if no specific fixing structure is defined for the battery cell block, it becomes difficult to package and assemble the battery cell block independently. Additionally, the battery cell block should be mounted and supported by relying on a side beam of the battery pack, and thus the installation of an additional structure such as the side beam is required.

### Summary

The present disclosure is to provide a battery module that is easily mountable in a pack case, and a battery pack including the same.

In addition, the present disclosure is to mount and assemble a battery module into a pack case of a battery pack without a structure such as a side beam of the battery pack.

The technical problems to be solved by the present disclosure are not limited to those described above, and other problems not explicitly mentioned will be apparent to those skilled in the art from the following description of the disclosure.

A battery module according to an embodiment of the present disclosure includes a battery cell stack in which a plurality of battery cells are stacked; and a busbar frame on one side of the battery cell stack.

The busbar frame includes a busbar electrically connected to a plurality of electrodes of the plurality of battery cells, and a plurality of through holes for fixing to a lower surface of a pack case comprising a battery pack.

The plurality of through holes extend through the busbar frame from an upper surface of the busbar frame to a lower surface of the busbar frame for coupling between the busbar frame and the pack case.

The busbar frame may be on at least one of front and rear surfaces of the battery cell stack.

The plurality of through holes may be in a direction perpendicular to a longitudinal direction extending from the front surface toward the rear surface of the battery cell stack.

The upper surface of the busbar frame may be a surface corresponding to an upper surface of the battery cell stack, and the lower surface of the busbar frame may be a surface corresponding to a lower surface of the battery cell stack.

The battery module according to an embodiment of the present disclosure may further include a plurality of fixing bolts in the plurality of through holes fixing the busbar frame and the pack case.

The pack case may have a plurality of coupling holes at positions corresponding to the plurality of through holes.

The plurality of fixing bolts may be in the through holes, and lower end portions of the plurality of fixing bolts may be in corresponding coupling holes.

The battery module according to an embodiment of the present disclosure may further include fixing members coupled to the lower end portions of the fixing bolts in corresponding through holes and coupling holes, thereby fixing the busbar frame to the pack case together with the fixing bolts.

The fixing members may be bosses or nuts.

A length of each of the fixing bolts may be equal to or greater than a sum of an up-and-down height of the busbar frame and a thickness of a lower surface of the pack case.

The busbar frame may include an electrode lead guide portion configured to guide a plurality of electrode leads of the plurality of electrodes in a set direction.

The electrode lead guide portion may include a plurality of inclined guide portions forming a passage configured to narrow in a direction extending from the plurality of battery cells toward the busbar frame.

The plurality of through holes may be within the plurality of inclined guide portions.

The busbar frame may include lead slits, through which the electrode leads pass, between a plurality of adjacent inclined guide portions, respectively.

The plurality of through holes may be along a direction parallel to a longitudinal direction of the lead slits.

The inclined guide portions may each have a first inclined surface and a second inclined surface connected to an end surface of the first inclined surface and at a different angle from the first inclined surface.

The plurality of through holes may be between the first inclined surfaces and the second inclined surfaces, respectively.

The first inclined surface and the second inclined surface may be in a triangular shape widening in a direction from the plurality of battery cells toward the busbar frame.

The battery module may further include an end plate outside the busbar frame.

The plurality of through holes may each be positioned within a region surrounded by the first inclined surface, the second inclined surface, and the end plate.

The plurality of through holes may be spaced apart and arranged along a direction in which the plurality of battery cells are stacked.

The busbar frame may include a front busbar frame on a front surface of the battery cell stack, and a rear busbar frame on a rear surface of the battery cell stack.

The plurality of through holes may include a plurality of front through holes extending through the front busbar frame from an upper surface of the front busbar frame to a lower surface of the front busbar frame, and a plurality of rear through holes extending through the rear busbar frame from an upper surface of the rear busbar frame to a lower surface of the rear busbar frame.

The battery module according to an embodiment of the present disclosure may further include a plurality of guide rods extending from the upper surface of the busbar frame to the lower surface of the busbar frame.

The plurality of through holes may be along a longitudinal direction of the guide rods within the plurality of guide rods.

The guide rods may each be supported within the electrode lead guide portion by a bracket coupled to the electrode lead guide portion.

The guide rods may each be mounted within a space surrounded by the inclined guide portion and an end plate outside the busbar frame by a bracket on a rear surface portion of the inclined guide portion.

The bracket may include a vertical bracket protruding from rear surface portions of the first and second inclined surfaces of the inclined guide portion and extending in an up-and-down direction, and a horizontal bracket protruding in a horizontal direction from the rear surface portions of the first and second inclined surfaces.

The guide rods may each have a cylindrical shape.

According to another embodiment of the present disclosure, a battery pack including the battery module and a pack case configured to mount the battery module therein is provided.

According to still another embodiment of the present disclosure, a vehicle including the battery pack is provided.

According to embodiments of the present disclosure, a battery module that is easily mountable in a pack case, and a battery pack including the same are provided.

In addition, according to an embodiment of the present disclosure, a battery module can be mounted and assembled into a pack case of a battery pack without a structure such as a side beam of the battery pack.

The effects achieved by the present disclosure are not limited to those described above, and other technical effects not explicitly mentioned will be apparent to those skilled in the art from the following description of the disclosure.

### Brief Description of the Drawings

FIG. 1 is a perspective view of a battery module according to an embodiment of the present disclosure, viewed from above.
FIG. 2 is a perspective view of the battery module according to an embodiment of the present disclosure, viewed from below.
FIG. 3 is a partially cutaway perspective view illustrating the battery module according to an embodiment of the present disclosure, cut along a cross section (X-Y plane).
FIG. 4 is a partially cutaway perspective view illustrating the battery module according to an embodiment of the present disclosure, cut along a longitudinal cross section in a transverse direction (Y-Z plane).
FIG. 5 is a partially cutaway perspective view illustrating the battery module according to an embodiment of the present disclosure, cut along a longitudinal cross section in a longitudinal direction (X-Z plane).
FIG. 6 is a partially cutaway cross-sectional view illustrating the battery module according to an embodiment of the present disclosure, cut along the longitudinal cross section in the longitudinal direction (X-Z plane).
FIG. 7 is an exploded perspective view of the battery module according to an embodiment of the present disclosure.
FIG. 8 is a perspective view of a busbar frame constituting the battery module according to an embodiment of the present disclosure, viewed from the front.
FIG. 9 is a perspective view of the busbar frame constituting the battery module according to an embodiment of the present disclosure, viewed from the rear.
FIG. 10 is a partially cutaway perspective view illustrating the busbar frame constituting the battery module according to an embodiment of the present disclosure, cut along the cross section (X-Y plane).
FIG. 11 is a cross-sectional view illustrating the battery module according to an embodiment of the present disclosure, cut along the cross section (X-Y plane).
FIG. 12 is an enlarged cross-sectional view of part 'A' of FIG. 11.
FIG. 13 is a perspective view illustrating a state in which a battery module constituting a battery pack according to an embodiment of the present disclosure is being mounted to a pack case by a fixing bolt and a boss.
FIG. 14 is a cross-sectional view illustrating a state in which the battery module constituting the battery pack according to an embodiment of the present disclosure is mounted to the pack case by the fixing bolt and the boss.
FIG. 15 is an enlarged cross-sectional view of part 'B' of FIG. 14.

### Detailed Description

The advantages and features of the present disclosure, and a method for achieving the same will become apparent with reference to embodiments described in detail below together with the accompanying drawings. However, the present disclosure is not limited to the embodiments disclosed below, but can be implemented in a variety of different forms. The embodiments are provided to only complete the present disclosure and to allow one skilled in the art to which the present disclosure belongs to completely understand the category of the present disclosure. The present disclosure is only defined by the category of the claims. Thus, in some embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. In contrast, when an element is referred to as being "directly on" another element, there are no intervening elements present. In addition, when an element such as a layer, a film, a region, a plate, or the like is referred to as being "below" another element, it may be "directly below" another element or an intervening element may also be present. Conversely, when an element is referred to as being "directly below" another element, there are no intervening elements present.

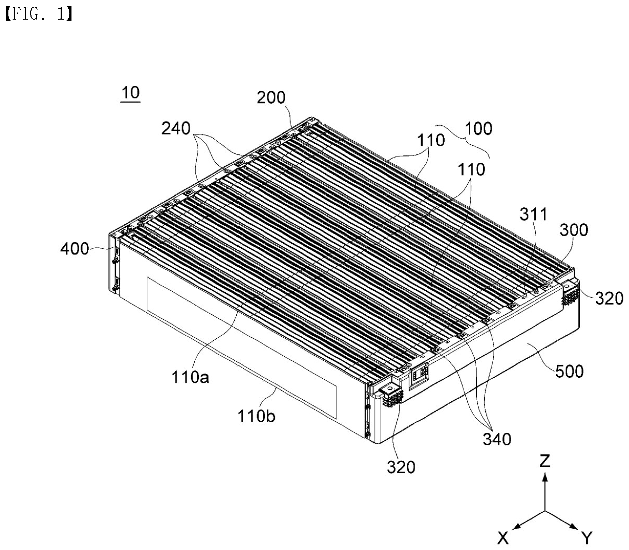

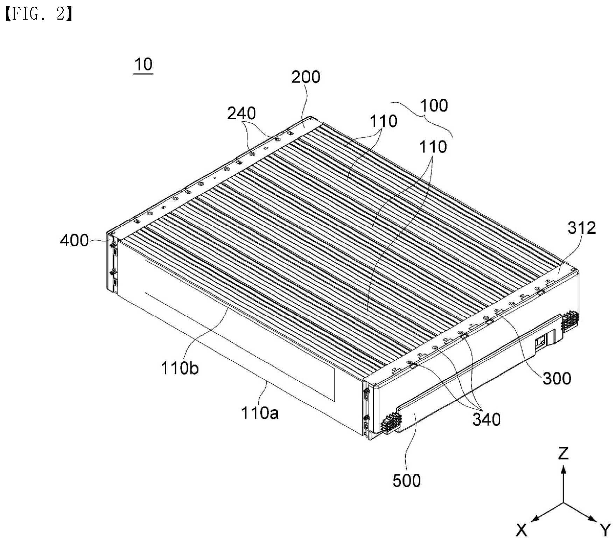

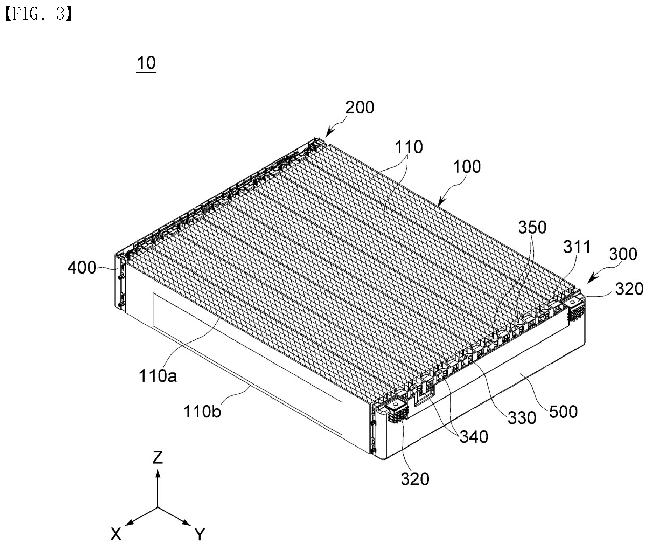

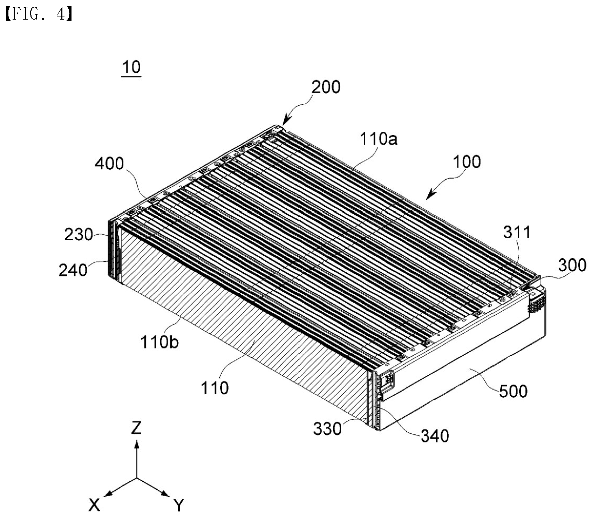

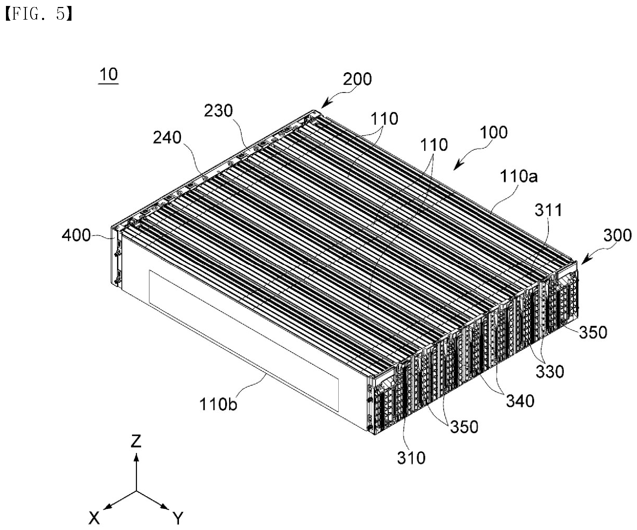

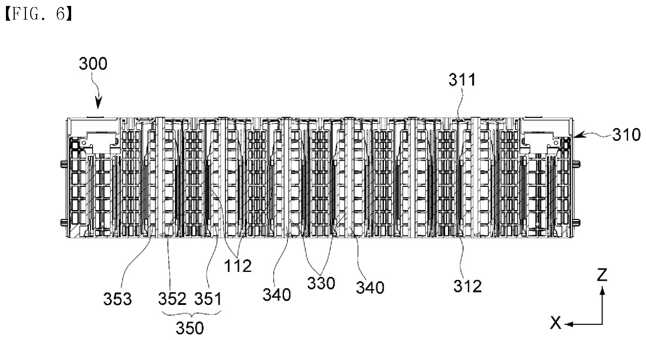

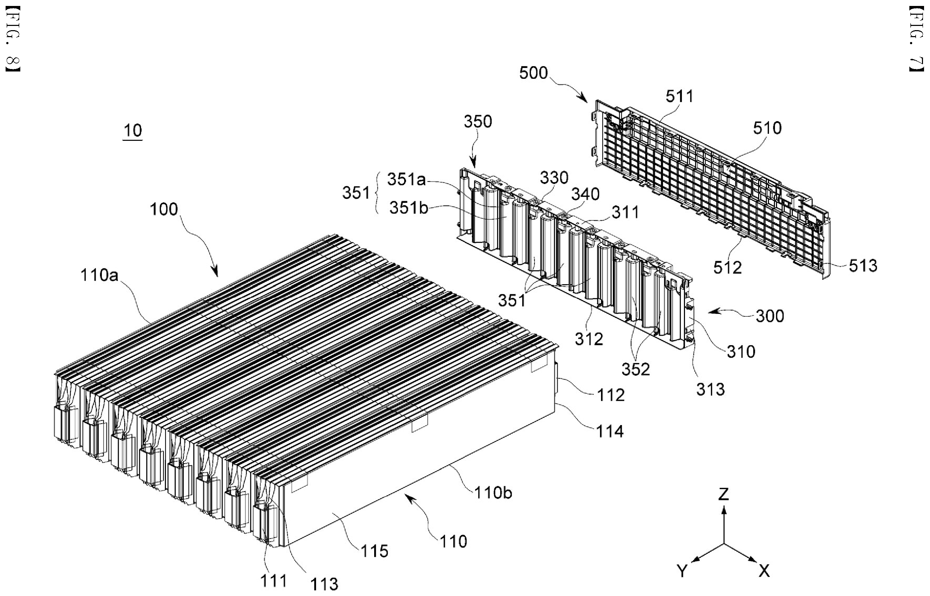

FIG. 1 is a perspective view of a battery module according to an embodiment of the present disclosure, viewed from above. FIG. 2 is a perspective view of the battery module according to an embodiment of the present disclosure, viewed from below. FIG. 3 is a partially cutaway perspective view illustrating the battery module according to an embodiment of the present disclosure, cut along a cross section (X-Y plane). FIG. 4 is a partially cutaway perspective view illustrating the battery module according to an embodiment of the present disclosure, cut along a longitudinal cross section in a transverse direction (Y-Z plane). FIG. 5 is a partially cutaway perspective view illustrating the battery module according to an embodiment of the present disclosure, cut along a longitudinal cross section in a longitudinal direction (X-Z plane). FIG. 6 is a partially cutaway cross-sectional view illustrating the battery module according to an embodiment of the present disclosure, cut along the longitudinal cross section in the longitudinal direction (X-Z plane). FIG. 7 is an exploded perspective view of the battery module according to an embodiment of the present disclosure.

Referring to FIGS. 1 to 7, a battery module 10 according to an embodiment of the present disclosure may include a battery cell stack 100 in which a plurality of battery cells 110 are stacked, one or more busbar frames 200 and 300 arranged on one side and/or the other side of the battery cell stack 110, and end plates 400 and 500 arranged outside the busbar frames 200 and 300. In the illustrated embodiment, the busbar frames 200 and 300 include a front busbar frame 200 arranged on one surface (front surface) of the battery cell stack 110, and a rear busbar frame 300 arranged on the other surface (rear surface) of the battery cell stack 110.

In the present specification, the battery module 10 may refer to a battery module having a configuration in which a plurality of battery cells 110 are mounted on the busbar frames 200 and 300 without a module case, i.e., a battery module that can be mounted by being directly coupled to a pack case (pack housing) of a battery pack without a module case in a cell-to-pack (CTP) process. Accordingly, in the battery module 10, components for mounting the module case can be omitted.

The battery cell stack 100 may be formed by stacking the plurality of battery cells 110 along one direction. The direction in which the plurality of battery cells 110 are stacked may be referred to as the X-axis direction (or -X-axis direction). A direction from a front surface toward a rear surface of the battery cell stack 100, or an opposite direction thereto, may be defined as a longitudinal direction (or a front-and-rear direction) of the battery cell stack 100, and may be the Y-axis direction in the drawing. A direction from an upper surface toward a lower surface of the battery cell stack 100, or an opposite direction thereto, may be defined as a width direction (or an up-and-down direction) of the battery cell stack 100, and may be the Z-axis direction in the drawing.

The longitudinal direction of the battery cell stack 100 may be substantially the same as the longitudinal direction of the battery cell 110. The battery cell 110 may be provided as a pouch-type battery cell capable of increasing the number of cells stacked per unit area. The battery cell 110 provided in the form of a pouch-type battery cell may include an electrode assembly and a cell case 115 that accommodates the electrode assembly (see FIG. 7). However, the battery cell 110 is not necessarily required to be provided as a pouch-type battery cell, and may instead be provided in prismatic, cylindrical, or various other forms. Electrode leads 111 and 112 of the battery cells 110 may be positioned on the front and rear surfaces of the battery cell stack 100. Busbars 320 of the battery module 10 may be arranged close to the front and rear surfaces of the battery cell stack 100 in order to easily form electrical connections with the electrode leads 111 and 112.

A cell case 115 of the battery cell 110 is provided to accommodate the electrode assembly, and may be a pouch-type cell case 115. The cell case 115 may include a lower case and an upper case that covers the lower case, and the upper and lower cases may be integrally formed. In addition, as illustrated in FIG. 7, a connection portion between the upper and lower cases may be formed into a structure in which it is bent and folded. The cell case 115 may be configured such that the upper case completely covers the lower case and a sealed portion is formed at a peripheral portion.

Each of the upper and lower cases may be formed with a receiving groove, and the electrode assembly may be accommodated in the receiving grooves of the upper and lower cases. Each of the upper and lower cases of the cell case 115 may be composed of a laminate structure including an inner covering layer, a metal layer, and an outer covering layer.

The inner covering layer is positioned on an inner side of the cell case 115 with respect to the metal layer, and is required to have insulating properties and resistance to an electrolyte because it comes into direct contact with the electrode assembly. Additionally, for sealing with the outside, sealability is required, i.e., the sealed portion formed by thermal bonding between the inner covering layers is required to exhibit excellent thermal bonding strength.

The metal layer is positioned between the inner and outer covering layers, and corresponds to a barrier layer that prevents moisture or various gases from penetrating into the battery from the outside. As a preferred material for the metal layer in contact with the inner covering layer, a lightweight aluminum (Al) thin film with excellent formability may be used.

The outer covering layer is positioned on an outer side of the cell case 115 with respect to the metal layer. For the outer covering layer, a heat-resistant polymer having excellent tensile strength, moisture impermeability, and air impermeability may be used in order to secure heat resistance and chemical resistance while protecting the electrode assembly. For example, nylon or polyethylene terephthalate may be used.

The electrode assembly that is accommodated in the cell case 115 may be configured as a jelly-roll type electrode assembly having a structure in which a separator is interposed between long sheet-like positive and negative electrodes and the resulting laminate is then wound, a stack-type electrode assembly including unit cells having a structure in which rectangular positive and negative electrodes are stacked with a separator interposed therebetween, a stack-and-folding type electrode assembly in which unit cells are wound using a long separator film, a lamination-and-stack type electrode assembly in which unit cells are stacked with a separator interposed therebetween and attached to each other, or the like.

The electrode assembly of the battery cell 110 may include two electrode tabs, and two electrode leads 111 and 112 respectively connected to the electrode tabs by welding. One of the two electrode leads 111 and 112 may be a positive electrode lead connected to the positive electrode tab, and the other may be a negative electrode lead connected to the negative electrode tab.

Lead films 113 and 114 may be attached to the electrode leads 111 and 112, respectively. The lead films 113 and 114 coupled to the electrode leads 111 and 112 are positioned between the electrode leads 111 and 112 and the cell case 115 to prevent a short circuit between the electrode leads 111 and 112 and the cell case 115 and to enhance sealing strength, thereby preventing leakage of the electrolyte, or the like. The two electrode leads 111 and 112 are illustrated as being arranged on both sides of the electrode assembly, respectively, but may instead be arranged on only one side of the electrode assembly, depending on the arrangement of the electrode tabs.

The busbar frame 200 and 300 includes busbars 320 electrically connected to a plurality of electrodes of the plurality of battery cells 110, and a plurality of through holes 240 and 340 provided for fixing to a lower surface of a pack case constituting a battery pack. The plurality of through holes 240 and 340 may be formed in the up-and-down direction Z along central portions of guide rods 230 and 330 mounted on the busbar frames 200 and 300.

The plurality of through holes 240 and 340 may be formed in a direction (up-and-down direction, Z-axis direction) perpendicular to the longitudinal direction (front- and-rear direction, Y-axis direction) from the front surface toward the rear surface of the battery cell stack 100. The front busbar frame (200) and the rear busbar frame (300) may have the same or similar structure. Accordingly, the following description will be made mainly with reference to the rear busbar frame 300.

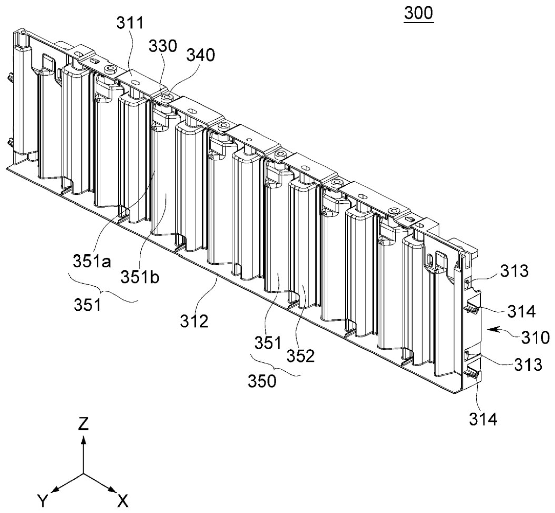

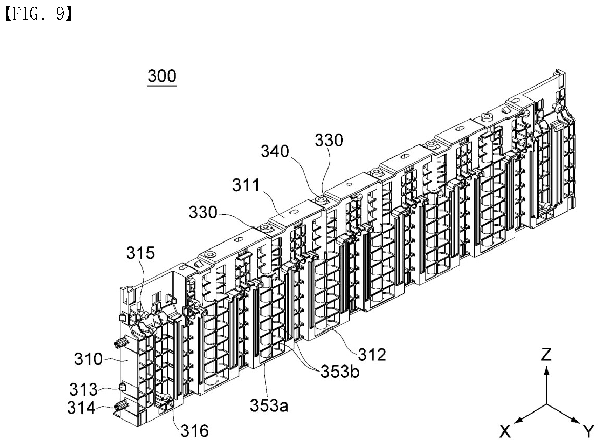

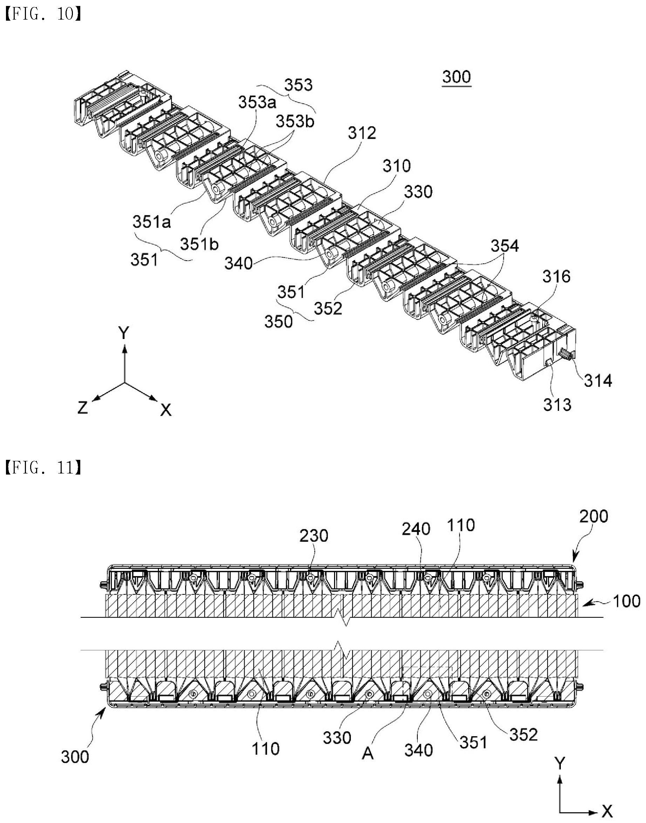

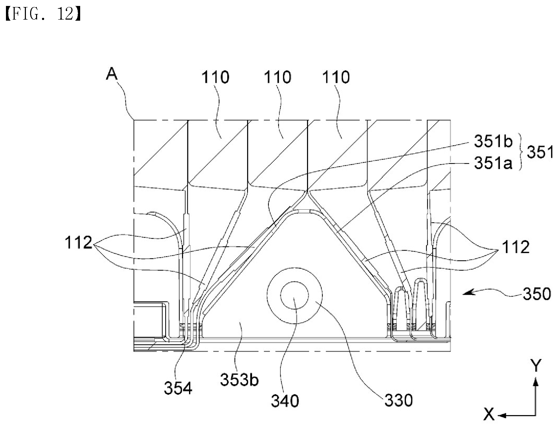

FIG. 8 is a perspective view of a busbar frame constituting the battery module according to an embodiment of the present disclosure, viewed from the front. FIG. 9 is a perspective view of the busbar frame constituting the battery module according to an embodiment of the present disclosure, viewed from the rear. FIG. 10 is a partially cutaway perspective view illustrating the busbar frame constituting the battery module according to an embodiment of the present disclosure, cut along the cross section (X-Y plane). FIG. 11 is a cross-sectional view illustrating the battery module according to an embodiment of the present disclosure, cut along the cross section (X-Y plane). FIG. 12 is an enlarged cross-sectional view of part 'A' of FIG. 11.

Referring to FIGS. 1 to 12, the busbar frame 300 may be positioned on one surface of the battery cell stack 100 to cover one surface of the battery cell stack 100 and to guide connection between the battery cell stack 100 and an external device. The busbar frame 300 may be positioned on the front or rear surface of the battery cell stack 100, as illustrated, or may also be positioned on the upper surface, lower surface, or side surface. The busbar 320 or module connector may be mounted on the busbar frame 300. One surface of the busbar frame 300 may be connected to one surface or the other surface of the battery cell stack 100, and the other surface of the busbar frame 300 may be connected to the busbar 320.

The busbar frame 300 may include a main frame 310. The main frame 310 may include an electrically insulating material. The main frame 310 may restrict the busbar 320 from coming into contact with portions of the battery cells 110 other than a portion where the busbar is joined to the electrode lead 111, 112, and may prevent an electrical short circuit. Busbar mounting members 315 and 316 for mounting the busbar 320 may be provided on the front or rear surface of the main frame 310.

The busbar 320 may be mounted on the other surface of the busbar frame 300 to electrically connect the battery cell stack 100 or battery cells 110 to an external device circuit. The busbar 320 may be arranged in plurality. The busbar 320 may be protected from external impacts and the like by being positioned between the battery cell stack 100 or the busbar frame 300 and the end plate 500, and may prevent the deterioration in durability due to external moisture and the like.

The busbar 320 may be electrically connected to the battery cell stack 100 via the electrode lead 111, 112 of the battery cell 110. Specifically, the electrode lead 111, 112 of the battery cell 110 may be bent and connected to the busbar 320 after passing through a lead slit formed in the busbar frame 300. The battery cells 110 constituting the battery cell stack 100 may be connected in series or in parallel by the busbars 320.

The busbar 320 may include a terminal busbar for electrically connecting the battery module 10 to another battery module 10. At least a portion of the terminal busbar 320 may be exposed to the outside of the end plate 500 to be connected to another battery module 10, and the end plate 500 may be provided with a terminal opening portion for this purpose. One end portion of the busbar 320 may be exposed through the terminal opening portion of the end plate 500.

The end plate 500 is provided to protect the battery cell stack 100 and electrical components connected thereto from external physical impacts. To this end, the end plate 500 may be made of a material having a predetermined strength, and may include, for example, metal such as aluminum or a plastic material. A connector opening portion may be positioned between the terminal opening portions arranged on both sides of the end plate 500, and a module connector may be exposed to the outside through the connector opening portion.

The end plate 500 may cover the busbar frame 300 or busbar 320 positioned on one surface of the battery cell stack 100. Each corner of the end plate 500 may be coupled to a corresponding corner of the busbar frame 300 by a hook fastening member 313, welding, bolt fastening, or the like. The end plate 500 may be arranged to cover each of both surfaces of the battery cell stack 100. Guide projections 314 may be provided on both sides of the busbar frame 300 to guide an insertion position of the battery module 10.

The end plate 500 may include an end frame 510 provided in a form corresponding to the busbar frame 300. An upper surface 511 and a lower surface 512 of the end frame 510 may be arranged to cover an upper surface and a lower surface of the busbar frame 300. To enable insertion of fixing bolts 600, the through holes 340 may be formed in a region not covered by the upper surface 511 and lower surface 512 of the end frame 510. Alternatively, opening portions (cut regions) may be formed in the upper surface 511 and lower surface 512 of the end frame 510 at positions corresponding to the through holes 340. Hook coupling members 513 that are coupled to the hook fastening members 313 of the busbar frame 300 may be formed on both sides of the end frame 510.

An insulating cover (not illustrated) for electrical insulation may be provided between the end plate 500 and the busbar frame 300. That is, the busbar frame 300, the insulation cover, and the end plate 500 may be sequentially positioned from the battery cell stack 100 toward the outside. As with the end plate 500, the busbar frame 300 and the insulating cover may each be provided in plurality. The insulating cover may include an electrically insulating material and may block the busbar 320 from coming into contact with the end plate 500.

The plurality of through holes 340 may be formed to extend through the busbar frame 300 from the upper surface 311 of the busbar frame 300 to the lower surface 312 of the busbar frame 300 for coupling between the busbar frame 300 and the pack case. The upper surface 311 of the busbar frame 300 may be a surface corresponding to an upper surface 100a of the battery cell stack 100, and the lower surface 312 of the busbar frame 300 may be a surface corresponding to a lower surface 100b of the battery cell stack 100.

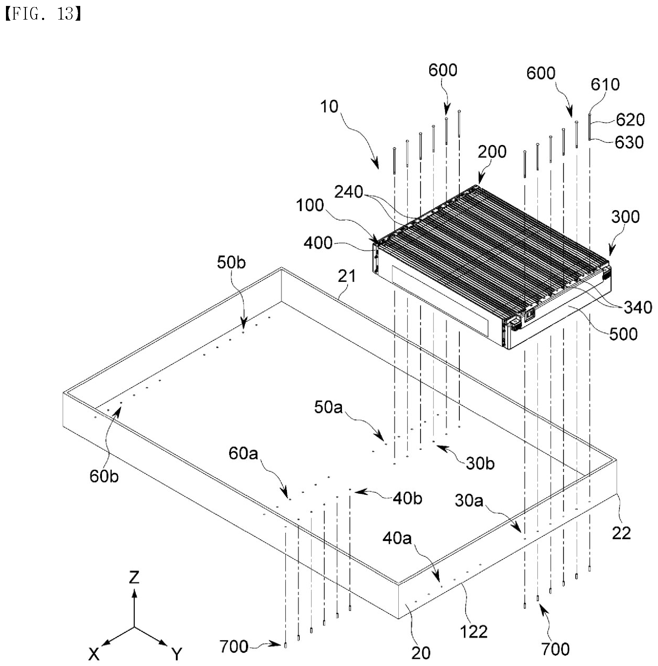

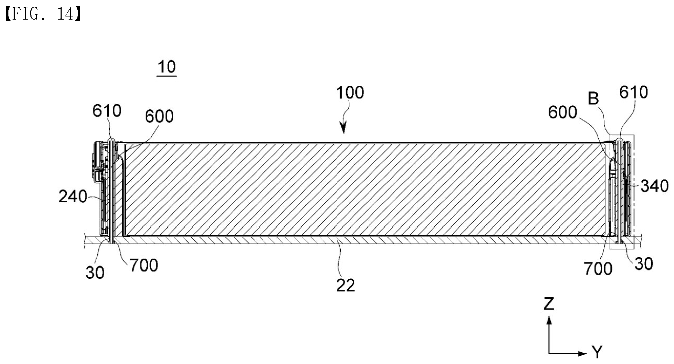

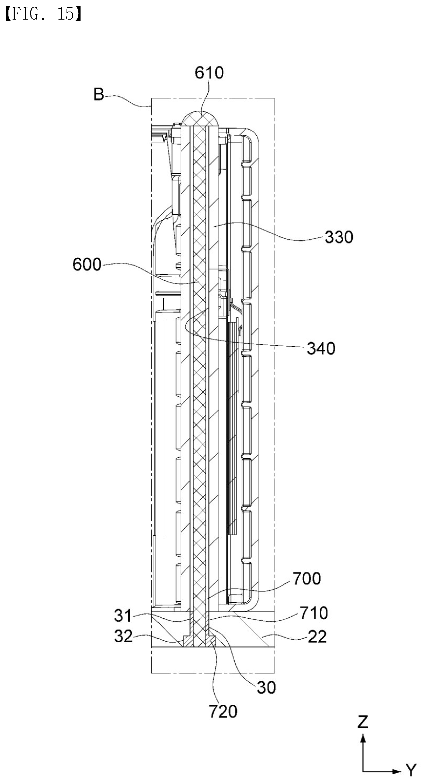

FIG. 13 is a perspective view illustrating a state in which a battery module constituting a battery pack according to an embodiment of the present disclosure is being mounted to a pack case by a fixing bolt and a boss. FIG. 14 is a cross-sectional view illustrating a state in which the battery module constituting the battery pack according to an embodiment of the present disclosure is mounted to the pack case by the fixing bolt and the boss. FIG. 15 is an enlarged cross-sectional view of part 'B' of FIG. 14. The battery module 10 according to an embodiment of the present disclosure may further include a plurality of fixing bolts 600 and a plurality of fixing members 700.

The plurality of fixing bolts 600 may be inserted into the plurality of through holes 340 to fix the busbar frame 300 to a pack case 20. In order to enable the battery module 10 to be fixed to the pack case 20 by the plurality of fixing bolts 600, the pack case 20 may include a plurality of coupling holes 30 in a lower surface 22 thereof at positions corresponding to the plurality of through holes 340. The coupling hole 30 may be formed to have a diameter larger than an outer diameter of the guide rod 330 so that the fixing member 700 such as a boss or a nut can be inserted.

The plurality of fixing bolts 600 may be inserted into the through holes 340 of the busbar frame 300. Lower end portions of the plurality of fixing bolts 600 may be inserted into the corresponding coupling holes 30 of the pack case 20. The fixing member 700 may be coupled to the lower end portion of the fixing bolt 600 inserted into the corresponding through hole 340 and coupling hole 30, thereby fixing the busbar frame 300 to the pack case 20 together with the fixing bolt 600. The fixing member 700 may be a boss or a nut.

In order to enable the busbar frame 300 to be easily mounted in the pack case 20 by the fixing bolt 600 and the fixing member 700, a length of the fixing bolt 600 may be provided to be greater than an up-and-down height of the busbar frame 300 (a distance between the upper and lower surfaces of the busbar frame). A head 610 having a larger diameter than that of the through hole 340 may be provided at the top of the fixing bolt 600. A shaft portion 620 of the fixing bolt 600 may be inserted into the through hole 340. The shaft portion 620 of the fixing bolt 600 may have a size equal to or slightly smaller than that of the through hole 340. A coupling portion 630, such as a screw portion, that is coupled to the fixing member 700 may be provided at a lower end of the fixing bolt 600.

The fixing member 700 may include a fastening portion 710 that is inserted into a fastening hole 31 of the coupling hole 30 provided in the lower surface 22 of the pack case 20 and is coupled to the coupling portion 630 of the fixing bolt 600, and a fastening projection 720 provided at a lower portion of the fastening portion 710 and protruding in a radial direction. The fastening projection 720 may be mounted on a step portion 32 of the coupling hole 30 provided in the lower surface 22 of the pack case 20, thereby maintaining a coupled state between the pack case 20 and the battery module 10 while the fixing member 700 is coupled to the fixing bolt 600. When the battery module 10 is mounted in the pack case 20, a cover (not illustrated) may be coupled to an upper portion of the pack case 20.

The busbar frame 300 may include an electrode lead guide portion 350 for guiding a plurality of electrode leads 112 of a plurality of electrodes constituting the battery cells 110 in a set direction. The electrode lead guide portion 350 may include a plurality of inclined guide portions 351 that form a passage narrowing in a direction extending from the plurality of battery cells 110 toward the busbar frame 300, and a curved guide portion 352 that smoothly guides the electrode lead 112 through a curved surface. The inclined guide portion 351 may have a first inclined surface 351a and a second inclined surface 351b connected to an end surface of the first inclined surface 351a and formed at a different angle from the first inclined surface 351a.

The plurality of through holes 340 may be formed within the plurality of inclined guide portions 351. The plurality of through holes 340 may be provided by the plurality of guide rods 330. The guide rod 330 may be provided in a cylindrical shape. The plurality of guide rods 330 may be formed to extend from the upper surface 311 of the busbar frame 300 to the lower surface 312 of the busbar frame 300. The plurality of through holes 340 may be formed along a longitudinal direction of the guide rods 330 within the plurality of guide rods 330.

The busbar frame 300 may have lead slits 354, through which the electrode leads 112 pass, between the plurality of adjacent inclined guide portions 351. The plurality of through holes 340 may be formed along a direction parallel to the longitudinal direction of the lead slits 354. The plurality of through holes 340 may each be formed between the first inclined surface 351a and the second inclined surface 351b of the inclined guide portion 351.

The first inclined surface 351a and the second inclined surface of the inclined guide portion 351 may be provided in a triangular shape widening in a direction from the plurality of battery cells 110 toward the busbar frame 300. The plurality of through holes 340 may each be formed to be positioned within a region surrounded by the first inclined surface 351a and the second inclined surface 351b of the inclined guide portion 351 and the end plate 500.

To this end, the guide rod 330 may be mounted within the region surrounded by the first inclined surface 351a, the second inclined surface 351b, and the end plate 500 by a bracket 353 (353a and 353b) protruding from rear surface portions of the first inclined surface 351a and the second inclined surface 351b. The bracket 353 may include a vertical bracket 353a protruding from the rear surface portions of the first inclined surface 351a and the second inclined surface 351b and extending in the up-and-down direction, and a horizontal bracket 353 protruding in a horizontal direction.

The guide rod 330 may be firmly mounted between the inclined guide portion 351 and the end plate 500 by the vertical bracket 353a and the horizontal bracket 353. In addition, since the guide rod 330 is mounted in the space between the inclined guide portion 351 and the end plate 500, there is no need to secure an additional space for mounting the guide rod 330. Therefore, the space utilization of the busbar frame 300 can be increased by mounting the guide rods 330 using the structure of the electrode lead guide portion 350 of the busbar frame 300. The guide rod 330 may also be installed by a bracket within the electrode lead guide portion 350, such as the curved guide portion 352, in addition to the inclined guide portion 351.

The vertical bracket 353a and the horizontal bracket 353 may be stably supported by the first inclined surface 351a and the second inclined surface 351b of the inclined guide portion 351, thereby firmly supporting the guide rod 330. Therefore, according to an embodiment of the present disclosure, the battery module 10 can be firmly mounted in the pack case of the battery pack by the structure of the electrode lead guide portion 350, the coupling structure between the vertical bracket 353a and horizontal bracket 353 and the guide rod 330, and the fixing bolt coupled to the through hole 340 formed inside the guide rod 330. Accordingly, since the battery module 10 can be stably mounted in the pack case even without a separate side beam being mounted on the pack case, the number of battery cells mounted per unit area can be increased by omitting the side beam on the pack case, and the battery pack can be made lighter.

The plurality of through holes 340 may be formed to be spaced apart and arranged along the direction in which the plurality of battery cells 110 are stacked. The plurality of through holes 340 may include a plurality of front through holes formed to extend through the front busbar frame 200 from an upper surface of the front busbar frame 200 to a lower surface of the front busbar frame 200, and a plurality of rear through holes formed to extend through the rear busbar frame 300 from an upper surface of the rear busbar frame 300 to a lower surface of the rear busbar frame 300.

In the embodiment illustrated in FIG. 13, a total of four coupling hole sets (first to fourth coupling hole sets) are provided in the pack case 20 to allow four battery modules to be mounted, However, the number of battery modules mounted in the pack case 20 may be variously modified. The first coupling hole set 30a and 30b, the second coupling hole set 40a and 40b, the third coupling hole set 50a and 50b, and the fourth coupling hole set 60a and 60b may be provided at different locations on the lower surface of the pack case 20 for mounting different battery modules.

In the illustrated embodiment, the fixing bolts 600 are inserted through the upper surfaces of the busbar frames 200 and 300 and are coupled to the fixing members 700 at the lower portions of the busbar frames 200 and 300. However, the fixing bolts 600 may also be inserted through the lower surface of the pack case 20 and the lower surfaces of the busbar frames 200 and 300 and coupled to the fixing members 700 at the upper portions of the busbar frame 200 and 300, thereby mounting the battery module 10 in the pack case 20.

The battery module 10 according to an embodiment of the present disclosure can be easily mounted in the pack case of the battery pack according to the cell-to-pack (CTP) process, via the through holes penetrating the busbar frames 200 and 300 vertically, the fixing bolts, and the fixing members (bosses, nuts, or the like). According to the cell-to-pack (CTP) process, the process of mounting/assembling a plurality of battery cells in a module case is omitted, which can simplify and streamline the manufacturing process. Additionally, the omission of the module case can increase space efficiency and energy density, and reduce the weight of the battery pack.

In addition, by arranging the battery cells directly into the pack case of the battery pack according to the CTP process, the cooling system and structure can be designed more efficiently, thereby improving the thermal management performance of the battery. According to an embodiment of the present disclosure, the battery cell block can be individually packaged and assembled, and can be firmly mounted in a pack case without a side beam of the battery pack.

One or more battery modules 10 according to an embodiment of the present disclosure as described above may form a battery pack. The battery pack according to an embodiment of the present disclosure may accommodate one or more battery modules 10 inside a pack case, and may include various control and protection systems such as a battery management system (BMS) and a cooling system.

The battery module 10 and the battery pack according to the embodiments of the present disclosure configured in this manner may be applied to various devices. Specifically, they may be applied to transportation means such as electric bicycles, electric vehicles, and hybrid electric vehicles, or energy storage systems (ESS), but are not limited thereto and may be applied to various other devices that use secondary batteries.

Although the present disclosure has been described with reference to embodiments as described above, it is not limited to the above-described embodiments, and various changes and modifications can be made by one skilled in the art to which the present disclosure belongs without departing from the spirit of the present disclosure.

## Claims

1. A battery module comprising:
a battery cell stack in which a plurality of battery cells are stacked; and
a busbar frame on one side of the battery cell stack, wherein
the busbar frame comprises a busbar electrically connected to a plurality of electrodes of the plurality of battery cells, and a plurality of through holes for fixing to a lower surface of a pack case comprising a battery pack, and
the plurality of through holes extend through the busbar frame from an upper surface of the busbar frame to a lower surface of the busbar frame for coupling between the busbar frame and the pack case.

2. The battery module of claim 1, wherein
the busbar frame is on at least one of front and rear surfaces of the battery cell stack, and
the plurality of through holes are in a direction perpendicular to a longitudinal direction extending from the front surface toward the rear surface of the battery cell stack.

3. The battery module of claim 1, wherein the upper surface of the busbar frame is a surface corresponding to an upper surface of the battery cell stack, and the lower surface of the busbar frame is a surface corresponding to a lower surface of the battery cell stack.

4. The battery module of claim 1, further comprising a plurality of fixing bolts in the plurality of through holes fixing the busbar frame and the pack case.

5. The battery module of claim 4, wherein
the pack case has a plurality of coupling holes at positions corresponding to the plurality of through holes, and
the plurality of fixing bolts are in the through holes, and lower end portions of the plurality of fixing bolts are in corresponding coupling holes of the pack case.

6. The battery module of claim 5, further comprising fixing members coupled to the lower end portions of the fixing bolts in corresponding through holes and coupling holes, thereby fixing the busbar frame to the pack case together with the fixing bolts,
wherein the fixing members are bosses or nuts.

7. The battery module of claim 4, wherein a length of each of the fixing bolts is equal to or greater than an up-and-down height of the busbar frame.

8. The battery module of claim 5, wherein the busbar frame comprises an electrode lead guide portion configured to guide a plurality of electrode leads of the plurality of electrodes in a set direction,
the electrode lead guide portion comprises a plurality of inclined guide portions providing a passage narrowing in a direction extending from the plurality of battery cells toward the busbar frame, and
the plurality of through holes are within the plurality of inclined guide portions.

9. The battery module of claim 8, wherein
the busbar frame comprises lead slits, through which the electrode leads pass, between a plurality of adjacent inclined guide portions, respectively, and
the plurality of through holes are along a direction parallel to a longitudinal direction of the lead slits.

10. The battery module of claim 8, wherein
the inclined guide portions each have a first inclined surface and a second inclined surface connected to an end surface of the first inclined surface and at a different angle from the first inclined surface, and
the plurality of through holes are provided between the first inclined surfaces and the second inclined surfaces, respectively.

11. The battery module of claim 10, wherein the first inclined surface and the second inclined surface are in a triangular shape widening in a direction from the plurality of battery cells toward the busbar frame.

12. The battery module of claim 10, further comprising an end plate outside the busbar frame,
wherein the plurality of through holes are each positioned within a region surrounded by the first inclined surface, the second inclined surface, and the end plate.

13. The battery module of claim 1, wherein the plurality of through holes are spaced apart from each other, and along a direction in which the plurality of battery cells are stacked.

14. The battery module of claim 1, wherein
the busbar frame comprises a front busbar frame on a front surface of the battery cell stack, and a rear busbar frame on a rear surface of the battery cell stack, and
the plurality of through holes comprise
a plurality of front through holes extending through the front busbar frame from an upper surface of the front busbar frame to a lower surface of the front busbar frame, and
a plurality of rear through holes extending through the rear busbar frame from an upper surface of the rear busbar frame to a lower surface of the rear busbar frame.

15. The battery module of claim 1, further comprising a plurality of guide rods extending from the upper surface of the busbar frame to the lower surface of the busbar frame,
wherein the plurality of through holes are along a longitudinal direction of the guide rods within the plurality of guide rods.

16. The battery module of claim 15, wherein
the busbar frame comprises an electrode lead guide portion guiding a plurality of electrode leads of the plurality of electrodes in a set direction, and
the guide rods are each supported within the electrode lead guide portion by a bracket coupled to the electrode lead guide portion.

17. The battery module of claim 16, wherein
the electrode lead guide portion comprises a plurality of inclined guide portions providing a passage narrowing in a direction extending from the plurality of battery cells toward the busbar frame, and
the guide rods are each mounted within a space surrounded by a respective inclined guide portion and an end plate arranged outside the busbar frame by a bracket formed on a rear surface portion of the respective inclined guide portion.

18. The battery module of claim 17, wherein the bracket comprises a vertical bracket protruding from rear surface portions of the first and second inclined surfaces of the respective inclined guide portion and extending in an up-and-down direction, and a horizontal bracket protruding in a horizontal direction from the rear surface portions of the first and second inclined surfaces.

19. A battery pack comprising the battery module of claim 1 and a pack case configured to mount the battery module.

20. A vehicle comprising the battery pack of claim 19.
